(19) Europäisches Patentamt / European Patent Office / Office européen des brevets

(11) **EP 4 543 731 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **23721416.8**

(22) Anmeldetag: **24.04.2023**

(51) Internationale Patentklassifikation (IPC):
*B60W 60/00* $^{(2020.01)}$ *B60W 50/00* $^{(2006.01)}$

(52) Gemeinsame Patentklassifikation (CPC):
**B60W 60/0011;** B60W 2050/0027; B60W 2520/105; B60W 2554/20; B60W 2554/40; B60W 2554/801; B60W 2554/802; B60W 2556/20

(86) Internationale Anmeldenummer:
**PCT/EP2023/060701**

(87) Internationale Veröffentlichungsnummer:
**WO 2023/247093 (28.12.2023 Gazette 2023/52)**

(54) **VERFAHREN ZUR PLANUNG EINER SOLLTRAJEKTORIE FÜR EIN AUTOMATISIERT FAHRENDES FAHRZEUG**

METHOD FOR PLANNING A TARGET TRAJECTORY FOR AN AUTOMATED VEHICLE

PROCÉDÉ DE PLANIFICATION DE TRAJECTOIRE CIBLE POUR VÉHICULE AUTOMATISÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.06.2022 DE 102022002253**

(43) Veröffentlichungstag der Anmeldung:
**30.04.2025 Patentblatt 2025/18**

(73) Patentinhaber: **Mercedes-Benz Group AG 70372 Stuttgart (DE)**

(72) Erfinder:
• KOLBE, Martin, Ulrich
  78234 Engen (DE)
• HECKMANN, Alexander
  78315 Radolfzell (DE)
• SCHÄFER, Simon
  70372 Stuttgart (DE)

(74) Vertreter: **Novagraaf Group Chemin de l'Echo 3 1213 Onex / Geneva (CH)**

(56) Entgegenhaltungen:
WO-A1-2020/041214    WO-A1-2022/066458
DE-A1- 102020 004 215    US-A1- 2021 114 617

**Beschreibung**

Die Erfindung betrifft ein Verfahren zur Planung einer Solltrajektorie für ein automatisiert fahrendes Fahrzeug gemäß dem Oberbegriff des Anspruchs 1.

Aus der DE 10 2020 108 857 A1 ist ein Verfahren zur Planung einer Solltrajektorie, die von einem Fahrzeug automatisiert abgefahren werden soll, bekannt. Die Planung beruht auf einer Bestimmung einer diskreten Menge an Kandidaten für die Solltrajektorie sowie auf einer Auswahl eines Kandidaten aus der bestimmten Menge an Kandidaten. Die Auswahl basiert auf vorgegebenen Kostenfunktionen. Bei Feststellung einer Änderung einzuhaltender Rahmenbedingungen und auszuführender Fahraufgaben wird eine Vorsteuerung der Auswahl vorgenommen, indem die Kostenfunktionen für einzelne Trajektorienabschnitte der Kandidaten an die geänderten Randbedingungen und Fahraufgaben angepasst werden, um Trajektorienabschnitten, die sich zur Einhaltung der geänderten Randbedingungen und zur Ausführung der geänderten Fahraufgaben besser eignen als andere Trajektorienabschnitte, geringere Kosten zuzuweisen. Die Solltrajektorie umfasst als Datensatz sowohl Informationen über einen Ortsverlauf, dem das Fahrzeug beim Abfahren der Solltrajektorie folgen soll, als auch weitere Informationen über eine Beschleunigung und eine Fahrgeschwindigkeit, mit der sich das Fahrzeug beim Abfahren der Solltrajektorie bewegen soll. Weiterhin wird eine Menge von Trajektorien, aus denen die Solltrajektorie ausgewählt wird, diskretisiert, wobei in einem Vorausschauhorizont eine vorbestimmte Menge von zeitlich geordneten Trajektorienstützpunkten ermittelt und die Menge von gemäß einer zeitlichen Ordnung durch die verschiedenen Trajektorienstützpunkte verlaufenden Trajektorien bestimmt wird. Die Menge der gemäß der zeitlichen Ordnung durch die Trajektorienstützpunkte verlaufenden Trajektorien bildet eine Trajektorienschar, die als Kandidaten bei der Auswahl der Solltrajektorie berücksichtigt wird. Für jede Trajektorie der Trajektorienschar werden mittels vorgegebener Kostenfunktionen Kosten ermittelt, wobei mittels einer gewichteten Summation der für die verschiedenen Randbedingungen bestimmten Kosten eines Trajektorienabschnitts Gesamtkosten eines Trajektorienabschnitts ermittelt werden. Kosten einer Trajektorie werden mittels Summation von Gesamtkosten ihrer Trajektorienabschnitte ermittelt. Es wird dann als Soll-Trajektorie die Trajektorie aus der Trajektorienschar ausgewählt, die die geringsten Kosten aufweist.

Aus der DE 10 2020 200 183 A1 ist ein Verfahren zur Steuerung eines Fahrzeugs bekannt, bei dem eine probabilistische Freiraumkarte mit statischen und dynamischen Objekten für das Umfeld des Fahrzeugs erstellt wird und bei dem unter Berücksichtigung der probabilistischen Freiraumkarte eine Trajektorie des Fahrzeugs geplant und mittels einer Kostenfunktion optimiert wird.

Aus der DE 10 2015 016 544 A1 ist ein Verfahren zum Bestimmen einer Ausweichtrajektorie für ein Fahrzeug zum Umfahren eines Hindernisses bekannt, bei dem vorgesehen ist, die Ausweichtrajektorie hinsichtlich vorgegebener Kriterien zu optimieren, wobei die vorgegebenen Kriterien eine Obergrenze einer Beschleunigung des Fahrzeugs, eine Untergrenze eines Abstands zum Hindernis und eine Quergeschwindigkeit am Ende der Ausweichtrajektorie umfassen.

Aus der DE 10 2016 218 121 A1 ist ein Verfahren zur Trajektorienplanung bekannt, bei dem vorgesehen ist, ein Bewegungsmodell des Egofahrzeugs, kollisionsrelevante Objekte sowie fahrphysikalische Beschränkungen für die Trajektorienplanung zu verwenden. Dabei werden mehrere mögliche Trajektorien jeweils mit einer Kostenfunktion bewertet und sodann wird die Trajektorie mit den minimalen Kosten ausgewählt.

Die WO 2020/041214 A1 offenbart ein Verfahren zur Steuerung eines autonom fahrenden Fahrzeugs über mindestens zwei Sensoren. Ein Bild einer Szene vor dem Fahrzeug wird mit einem ersten Sensor aufgenommen und einer Identifizierung des Objekts erfolgt anhand des Bildes mit einer bestimmten Konfidenzstufe. Wird festgestellt, dass die Konfidenzstufe der Identifizierung unter einem Schwellenwert liegt, erfolgt in Reaktion zur Erzeugung eines zweiten Bildes mit der Position des identifizierten Objekts das Ansteuern eines zweiten Sensors mit einem kleineren Sichtfeld als dem des ersten Sensors. Die weitere Identifizierung des Objekts in der Szene wird anhand des zweiten Bildes und die Steuerung des Fahrzeugs anhand der weiteren Identifizierung durchgeführt.

Die DE 10 2020 004215 A1 betrifft ein Verfahren zur Darstellung einer Verkehrssituation in einem Fahrzeug, bei dem mit Sensoren in der Umgebung vorliegende Umgebungsobjekte erfasst und diese mit Informationen angereichert werden. Die Informationen umfassen wenigstens einen Relativabstand zwischen Umgebungsobjekt und Fahrzeug sowie ein Zuverlässigkeitsmaß, welches die Zuverlässigkeit, mit der ein jeweiliges Umgebungsobjekt von wenigstens einem der Sensoren erfasst wird, kennzeichnet.

Die WO 2022/066458 A1 beschreibt ein Verfahren zur Bestimmung einer Trajektorie für ein autonom fahrendes Ego-Fahrzeug. Das Ego-Fahrzeug kann ein sich bewegendes Objekt in seiner Umgebung erkennen, um zwischen möglichen Trajektorien für das Ego-Fahrzeug zu wählen, berücksichtigt ein System die Kosten jeder möglichen Trajektorie für das sich bewegende Objekt. Anhand der Kosten der möglichen Trajektorien wählt das System eine der möglichen Trajektorien aus, auf der das Ego-Fahrzeug bewegt wird.

Aus der US 2021/114617 A1 ist ein Verfahren zur Planung einer Solltrajektorie für eine Fahrzeug bekannt, wobei eine Mehrzahl von Trajektorienkandidaten vorgegeben wird. Die Trajektorienkandidaten geben einen Pfad und eine Beschleunigung vor, mit der das Fahrzeug dem Pfad folgen soll. Mittels einer Kostenfunktion werden den Trajektorienkandidaten Kosten zugeordnet, wobei die Kostenfunktion von detektierten Objekten abhängige Objektkosten umfassen.

Die Objektkosten eines Objekts für einen Trajektorienkandidaten steigen mit sinkendem Abstand zwischen dem Objekt und dem Trajektorienkandidaten., wobei eine Solltrajektorie in Abhängigkeit der Trajektorienkosten aus der Mehrzahl der Trajektorienkandidaten ausgewählt wird.

Der Erfindung liegt die Aufgabe zu Grunde, ein neuartiges Verfahren zur Planung einer Solltrajektorie für ein automatisiert fahrendes Fahrzeug anzugeben.

Die Aufgabe wird erfindungsgemäß gelöst durch ein Verfahren, welches die im Anspruch 1 angegebenen Merkmale aufweist.

Vorteilhafte Ausgestaltungen der Erfindung sind Gegenstand der Unteransprüche.

In einem Verfahren zur Planung einer Solltrajektorie für ein automatisiert, insbesondere hochautomatisiert oder autonom fahrendes Fahrzeug wird eine Menge von Trajektoriekandidaten für einen vorgegebenen Planungshorizont vorgegeben, wobei jeder Trajektoriekandidat einen Pfad vorgibt, dem das Fahrzeug bei Auswahl des Trajektoriekandidaten als Solltrajektorie folgen soll, und eine Beschleunigung vorgibt, mit der das Fahrzeug diesem Pfad folgen soll. Innerhalb des Planungshorizonts werden Objekte detektiert und mittels einer vorgegebenen Kostenfunktion werden den Trajektoriekandidaten jeweils Trajektoriekosten zugeordnet, wobei die Kostenfunktion von den detektierten Objekten abhängige Objektkosten umfasst. Dabei steigen die Objektkosten eines Objekts für einen Trajektoriekandidaten mit sinkendem Abstand zwischen dem Objekt und dem Trajektoriekandidaten. Die Solltrajektorie wird in Abhängigkeit der Trajektoriekosten aus der Menge der Trajektoriekandidaten ausgewählt.

Für jedes detektierte Objekt wird ein Qualitätswert bestimmt, welcher ein Maß für eine Zuverlässigkeit der Detektion des Objekts angibt. Erfindungsgemäß wird für jedes Objekt in Abhängigkeit seines Qualitätswerts eine minimal zulässige Beschleunigung bestimmt, mit welcher das Fahrzeug auf das Objekt gebremst werden darf. Die Trajektoriekandidaten und die für diese ermittelten Objektkosten werden in Abhängigkeit der vom jeweiligen Trajektoriekandidaten vorgegebenen Beschleunigung und in Abhängigkeit der minimal zulässigen Beschleunigung bei der Bremsung auf das Objekt bewertet. Die Auswahl der Solltrajektorie wird zusätzlich unter Berücksichtigung der Bewertung der Trajektoriekandidaten und der für diese ermittelten Objektkosten durchgeführt.

Das vorliegende Verfahren ermöglicht es, die Qualität der Detektion der Objekte, das heißt der Existenzwahrscheinlichkeit, in Verkehrsszenarien, beispielsweise auch mit mehreren Objekten, zu berücksichtigen und einen maximalen Bremseingriff bei einer automatisierten Steuerung des Fahrzeugs entsprechend anzupassen. Dabei wird sichergestellt, dass ein Objekt mit geringer Detektionsqualität alleine nie zu einem stärkeren Bremseingriff als erlaubt führt. Es bleibt jedoch die Option, stärker zu bremsen, wenn dies aufgrund eines Objekts mit höherer Detektionsqualität erforderlich ist. Auch ist es möglich, ein Objekt mit geringer Detektionsqualität zu umfahren.

In einer möglichen Ausgestaltung des Verfahrens wird als Solltrajektorie der Trajektoriekandidat mit den geringsten Trajektoriekosten aus der Menge der Trajektoriekandidaten ausgewählt. Somit wird die Trajektorie als Solltrajektorie ausgewählt, in welcher die detektierten Objekte den geringsten Einfluss auf das Fahrzeug haben und/oder in welcher die geringste Anzahl von Objekten vorhanden ist.

In einer weiteren möglichen Ausgestaltung des Verfahrens wird bei der Bewertung eine Kategorisierung vorgenommen, wobei in der Kategorisierung zwischen einer ungefilterten und einer gefilterten Kategorie unterschieden wird. Dabei werden der ungefilterten Kategorie alle Objektkosten und die zugehörigen Trajektorienkandidaten zugeordnet. Das heißt, es werden keine Trajektoriekandidaten herausgefiltert. Der gefilterten Kategorie werden nur diejenigen Objektkosten und die zugehörigen Trajektorienkandidaten zugeordnet, für die gilt, dass das Minimum der von dem jeweiligen Trajektoriekandidaten vorgegebenen Beschleunigung größer als eine minimal zulässige Beschleunigung des jeweiligen Objekts ist. Dies ermöglicht, dass der gefilterten Kategorie nur diejenigen Trajektorienkandidaten zugeordnet werden, deren Beschleunigungen in dem durch die minimal zulässige Beschleunigung bestimmten zulässigen Rahmen liegen. In der gefilterten Kategorie fehlen also die Trajektoriekandidaten, die zu einer unzulässig starken Bremsung führen. Durch Berücksichtigung der Kategorien kann eine Zuverlässigkeit des Verfahrens weiter erhöht werden.

In einer weiteren möglichen Ausgestaltung des Verfahrens wird bei der Auswahl der Solltrajektorie aus der ungefilterten Kategorie und der gefilterten Kategorie jeweils der Trajektoriekandidat mit den geringsten Trajektoriekosten ausgewählt. Für die beiden ausgewählten Trajektoriekandidaten wird jeweils das Minimum der durch den jeweiligen Trajektoriekandidaten vorgegebenen Beschleunigung ermittelt und der Kandidat mit dem größeren Minimum wird als Solltrajektorie ausgewählt. Dies ermöglicht, dass bei einer Mehrzahl möglicher Trajektorien die Trajektorie als Solltrajektorie gewählt wird, welche bei gleicher Sicherheit eine weniger stärkere Bremsung auf ein Objekt durchführt, so dass ein Komfort für Fahrzeuginsassen bei gleicher Sicherheit erhöht ist.

Ausführungsbeispiele der Erfindung werden im Folgenden anhand von Zeichnungen näher erläutert.

Dabei zeigen:

Fig. 1  schematisch einen zeitlichen Verlauf einer Beschleunigung eines Fahrzeugs und zugehörigen zeitlichen Verlauf einer Längsposition des Fahrzeugs, wenn dieses einem Pfad einer Trajektorie folgt,

Fig. 2  schematisch zeitliche Verläufe einer Beschleunigung eines Fahrzeugs und zugehörige zeitliche Verläufe einer Längsposition des Fahrzeugs, wenn dieses Pfaden unterschiedlicher Trajektorien folgt,

Fig. 3   schematisch eine minimal zulässige Beschleunigung in Abhängigkeit von einer Zuverlässigkeit einer Detektion eines Objekts und

Fig. 4   schematisch einen Ablauf eines Verfahrens zur Ermittlung von Objektkosten,

Fig. 5   schematisch einen Ablauf eines Verfahrens zur Auswahl einer Solltrajektorie aus Trajektorien unterschiedlicher Kategorien und

Fig. 6   schematisch eine Draufsicht eines Verkehrsszenarios mit einem Fahrzeug und mehreren Objekten.

Einander entsprechende Teile sind in allen Figuren mit den gleichen Bezugszeichen versehen.

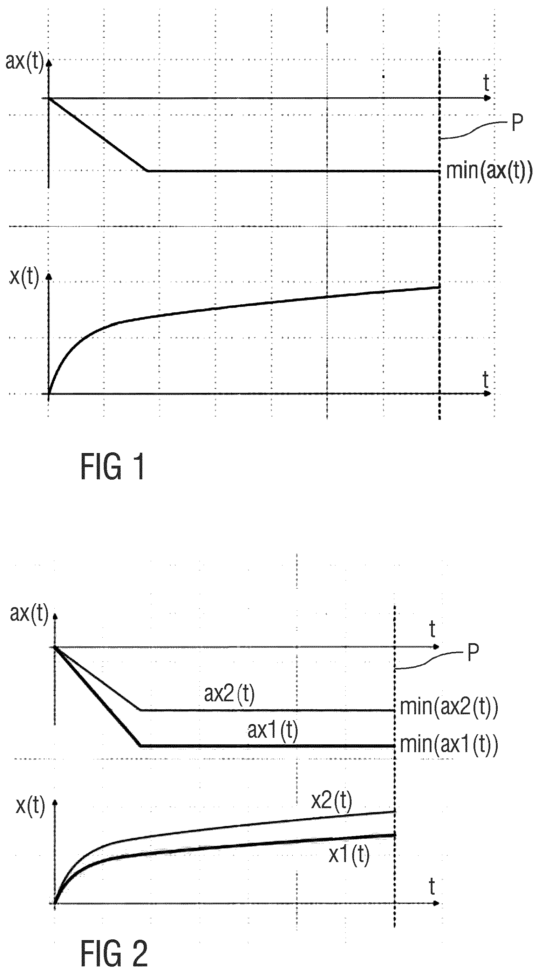

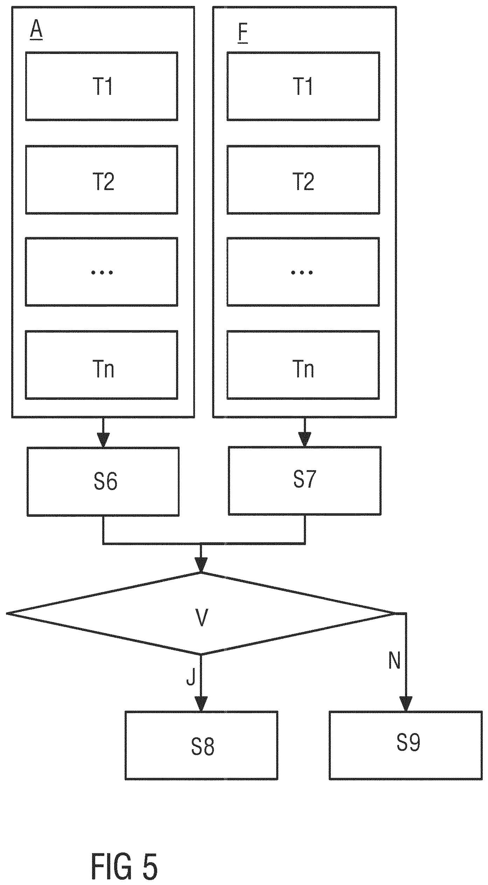

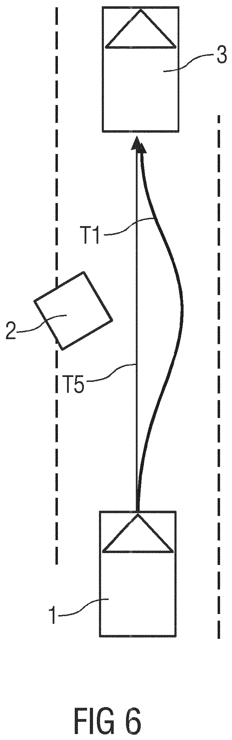

In Figur 1 sind eine Beschleunigung ax(t) eines in Figur 6 näher gezeigten automatisiert, insbesondere hochautomatisiert oder autonom fahrenden Fahrzeugs 1 in Abhängigkeit von der Zeit t und ein zugehöriger zeitlicher Verlauf einer Längsposition x(t) des Fahrzeugs 1, wenn dieses einem Pfad einer in Figur 5 gezeigten Trajektorie T1 bis Tn folgt, dargestellt.

Jede Trajektorie T1 bis Tn wird durch ihre Längsposition x(t), eine Querposition und deren Ableitungen, das heißt deren Geschwindigkeiten Längsrichtung und Querrichtung sowie deren Beschleunigung ax(t) in Längsrichtung und deren Beschleunigung in Querrichtung bis zu einem Planungshorizont P beschrieben. Dabei wird die Längsposition x(t) durch Integrieren einer vordefinierten Beschleunigung ax(t) abgeleitet. Die Beschleunigung ax(t) ist so definiert, dass die integrierte Längsposition x(t) die folgenden Kriterien erfüllt:

$$x1(t) < x2(t) \qquad\qquad\qquad (1)$$

und

$$\min(ax1(t)) < \min(ax2(t)) \text{ für } t = [0, P]. \qquad\qquad (2)$$

mit:

x1(t) = Längsposition x(t) beim Folgen einer Trajektorie T1,
x2(t) = Längsposition x(t) beim Folgen einer Trajektorie T2,
ax1(t) = Beschleunigung in Längsrichtung beim Folgen der Trajektorie T1,
ax2(t) = Beschleunigung in Längsrichtung beim Folgen der Trajektorie T2.

Dabei gibt eine Trajektorie T1 bis Tn neben dem Pfad, dem das Fahrzeug 1 folgen soll, auch einen Beschleunigungsverlauf vor, mit der das Fahrzeug 1 dem Pfad folgen soll. Die Beschleunigung ax(t) ist dabei der zeitliche Beschleunigungsverlauf beim Folgen der Trajektorie T1 bis Tn. Die Beschleunigung ax(t) ist negativ, wenn das Fahrzeug 1 abgebremst wird. Die Beschleunigung ax(t) weist ein Minimum min(ax(t)) auf.

Ein Beispiel für verschiedene zeitliche Verläufe einer Beschleunigung ax1(t), ax2(t) des Fahrzeugs 1 und zugehörige zeitliche Verläufe einer Längsposition x1(t), x2(t) des Fahrzeugs 1 sowie Minima min(ax1(t), min(ax2(t) der Beschleunigungen ax1(t), ax2(t) , wenn das Fahrzeug Pfaden unterschiedlicher Trajektorien T1, T2 folgt, ist in Figur 2 dargestellt.

In einem Verfahren zur Planung einer Solltrajektorie für das automatisiert fahrende Fahrzeug 1 werden mehrere Trajektorien T1 bis Tn, beispielsweise in Form einer Trajektorienschar, vorgegeben. Eine Anzahl der Trajektorien T1 bis Tn liegt beispielsweise in der Größenordnung von 1.000.

Dabei gilt die Bedingung

$$x1(t) < x2(t), \text{ wobei } \min(ax1(t)) < \min(ax2(t)). \qquad\qquad (3)$$

Diese Bedingung besagt, dass die Trajektorien T1 bis Tn der Trajektorienschar derart bestimmt werden, dass für zwei beliebige Trajektorien T1, T2 gilt, dass x1(t) < x2(t) sein soll, wenn min(ax1(t)) < min(ax2(t)) ist. Dies ist eine Randbedingung, die bei der Vorgabe der Trajektorien T1 bis Tn angewendet wird.

Das heißt, zur Planung der Solltrajektorie wird eine Menge von Trajektoriekandidaten für einen vorgegebenen Planungshorizont P vorgegeben, wobei jeder Trajektoriekandidat einen Pfad vorgibt, dem das Fahrzeug 1 bei Auswahl des Trajektoriekandidaten als Solltrajektorie folgen soll, und eine Beschleunigung ax(t) vorgibt, mit der das Fahrzeug 1 diesem Pfad folgen soll.

Zur Planung der Solltrajektorie werden weiterhin in Figur 6 näher dargestellte Objekte 2, 3 des Planungshorizonts P detektiert und mittels einer vorgegebenen Kostenfunktion den Trajektoriekandidaten jeweils Trajektoriekosten zugeordnet. Dabei umfasst die Kostenfunktion von den detektierten Objekten 2, 3 abhängige Objektkosten, wobei Objektkosten eines Objekts 2, 3 für einen Trajektoriekandidaten mit sinkendem Abstand zwischen dem Objekt 2, 3 und dem Trajektoriekandidaten steigen. Die Solltrajektorie wird dann in Abhängigkeit der Trajektoriekosten aus der Menge der Trajektoriekandidaten ausgewählt.

Hierbei wird für jedes detektierte Objekt 2, 3 ein Qualitätswert Q bestimmt wird, welcher ein Maß für eine Zuverlässigkeit der Detektion des Objekts 2, 3, das heißt eine Existenzwahrscheinlichkeit eines Objekts 2, 3 in einer Umgebung des Fahrzeugs 1, angibt.

Weiterhin wird für jedes Objekt 2, 3 in Abhängigkeit seines Qualitätswerts Q eine minimal zulässige Beschleunigung aQ bestimmt, mit welcher das Fahrzeug 1 auf das entsprechende Objekt 2, 3 gebremst werden darf.

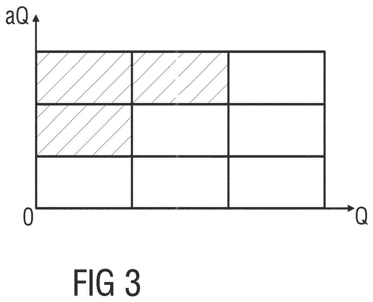

In Figur 3 ist eine solche minimal zulässige Beschleunigung aQ in Abhängigkeit von einer Zuverlässigkeit einer Detektion eines Objekts 2, 3, das heißt in Abhängigkeit von dessen Qualitätswert Q, dargestellt. Bei einer Bremsung des Fahrzeugs hat die minimal zulässige Beschleunigung aQ einen negativen Wert. Da eine negative Beschleunigung eine Verzögerung ist, bestimmt die minimal zulässige Beschleunigung aQ gleichzeitig eine maximal zulässige Verzögerung.

Die Bestimmung der minimal zulässigen Beschleunigung aQ, mit welcher auf ein Objekt 2, 3 gebremst werden darf, erfolgt unter Beachtung der folgenden Bedingung:

$$\min(ax(t)) \geq aQ. \qquad (4)$$

Dabei ist min(ax(t)) die minimale Beschleunigung auf einer Trajektorie T1 bis Tn, wobei auch min(ax(t)) bei einer Bremsung ein negativer Wert ist.

Mit Gleichung (4) wird also geprüft, ob die Beschleunigung aQ beim Bremsen im zulässigen Rahmen bleibt, wobei der zulässige Rahmen durch den Qualitätswert Q des entsprechenden Objekts 2, 3 bestimmt wird.

Wichtig ist hierbei, dass für jeden Wert der minimal zulässigen Beschleunigung aQ zumindest eine vorgegebene Trajektorie T1 bis Tn existiert, bei welcher gilt:

$$\min(ax(t)) = aQ. \qquad (5)$$

In Figur 3 ist sowohl die minimal zulässige Beschleunigung aQ als auch der Qualitätswert in einen geringen, einen mittleren und einen hohen Bereich unterteilt. Dabei ist ersichtlich, dass eine Bremsung mit einer maximalen Kraft nur dann zulässig ist, wenn das Objekt 2, 3 einen hohen Qualitätswert Q aufweist (dargestellt durch die nicht schraffierten Bereiche). Für Objekte 2, 3 mit mittlerem und geringem Qualitätswert Q ist eine solche Bremsung dagegen nicht zulässig (dargestellt durch die schraffierten Bereiche).

Um Probleme bei der Planung der Solltrajektorie zu vermeiden, wenn eine Kollision des Fahrzeugs 1 mit einem Objekt 2, 3 mit geringem Qualitätswert Q nur mit einer Solltrajektorie mit einer stärkeren Bremsung als erlaubt vermieden werden kann, ist zusätzlich vorgesehen, dass die Trajektoriekandidaten und für diese ermittelte Objektkosten in Abhängigkeit der vom jeweiligen Trajektoriekandidaten vorgegebenen Beschleunigung ax(t) und in Abhängigkeit der minimal zulässigen Beschleunigung aQ bei der Bremsung auf das Objekt 2, 3 bewertet werden und die Auswahl der Solltrajektorie zusätzlich unter Berücksichtigung der Bewertung der Trajektoriekandidaten und der für diese ermittelten Objektkosten durchgeführt wird.

Dabei werden die Objektkosten eines Objekts für jede Trajektorie der Trajektorienschar bewertet, wobei - wie bereits ausgeführt - die Objektkosten eines Objekts 2, 3 für einen Trajektoriekandidaten mit sinkendem Längs- und Querabstand zwischen dem Objekt 2, 3 und dem Trajektoriekandidaten steigen.

Sind mehrere Objekte 2, 3 vorhanden, dann könnte jedes der Objekte 2, 3 einen Beitrag zu den Objektkosten eines Trajektoriekandidaten liefern. In solchen Fällen wird geprüft, welches der Objekte 2, 3 hinsichtlich der Objektkosten am relevantesten ist, das heißt den höchsten Beitrag liefert, und die Bestimmung der Objektkosten für den Trajektoriekandidaten erfolgt ausschließlich auf der Basis des relevantesten Objekts 2, 3. Mit anderen Worten: Weniger relevante Objekte 2, 3 bleiben bei der Bestimmung der Objektkosten unberücksichtigt.

Bei der Bewertung die Trajektoriekandidaten und der für diese ermittelten Objektkosten wird eine Kategorisierung, in welcher zwischen einer ungefilterten Kategorie A und einer gefilterten Kategorie F, beide dargestellt in Figur 5, unterschieden wird. Dabei werden der ungefilterten Kategorie A alle Objektkosten und die zugehörigen Trajektoriekandidaten zugeordnet. Der gefilterten Kategorie F werden dagegen nur diejenigen Objektkosten und die zugehörigen Trajektoriekandidaten zugeordnet, für die gilt, dass das Minimum der von dem jeweiligen Trajektoriekandidaten vorgegebenen Beschleunigung min(ax(t)) größer als die minimal zulässige Beschleunigung aQ des jeweiligen Objekts 2, 3 ist.

Darf auf ein Objekt 2, 3 aufgrund seines Qualitätswerts höchstens mit einer Beschleunigung aQ = - 5 m/s$^2$ gebremst werden und die entsprechende Trajektorie T1 bis Tn erfordert eine Bremsung, bei der die Beschleunigung min(ax(t)) bis zu einem Wert von - 2 m/s$^2$ abfällt, ist die Bedingung min(ax(t)) > aQ erfüllt, das heißt - 2 m/s$^2$ > - 5 m/s$^2$. Die entsprechende Trajektorie T1 bis Tn und die Objektkosten werden sowohl der Kategorie A als auch der Kategorie F zugeordnet.

Darf auf ein Objekt 2, 3 aufgrund seines Qualitätswerts Q höchstens mit einer Beschleunigung aQ = - 5 m/s$^2$ gebremst werden und die entsprechende Trajektorie T1 bis Tn erfordert eine Bremsung, bei der die Beschleunigung min(ax(t)) bis zu einem Wert von - 6 m/s$^2$ abfällt, ist die Bedingung min(ax(t)) > aQ nicht erfüllt. Die entsprechende Trajektorie T1 bis Tn und die Objektkosten werden dann der ungefilterten Kategorie A aber nicht der gefilterten Kategorie F zugeordnet.

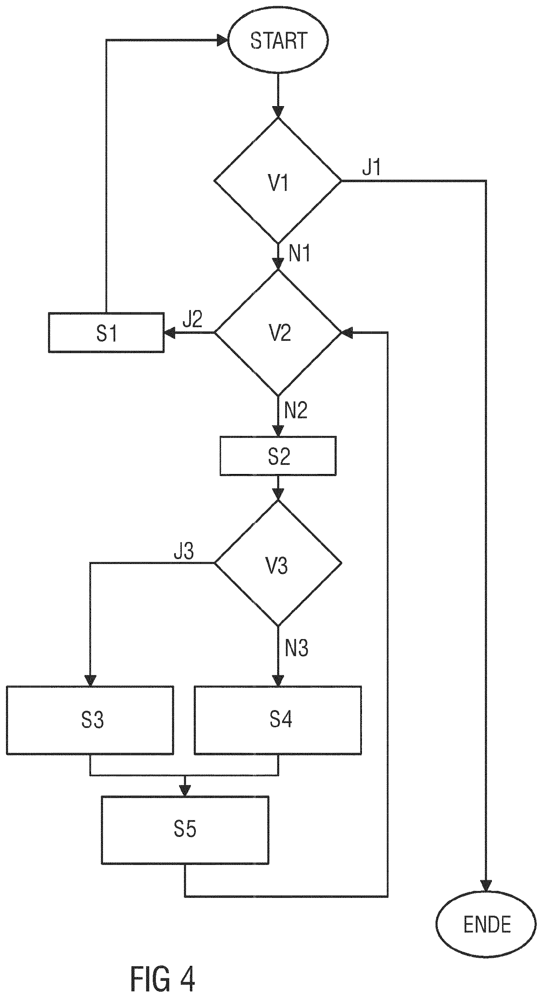

Ein mögliches Ausführungsbeispiel eines Ablaufs eines Verfahrens zur Ermittlung der Objektkosten ist in Figur 4 dargestellt.

Dabei wird in einer ersten Verzweigung V1 überprüft, ob bereits alle Trajektoriekandidaten einer Trajektorienschar ausgewertet wurden. Ist dies der Fall, dargestellt durch einen Ja-Zweig J1, wird das Verfahren beendet.

Ist dies nicht der Fall, dargestellt durch einen Nein-Zweig N1, wird in einer zweiten Verzweigung V2 überprüft, ob bereits alle Objekte 2, 3 eines Trajektoriekandidaten ausgewertet wurden. Ist dies der Fall, dargestellt durch einen Ja-Zweig J2, wird in einem Verfahrensschritt S1 der nächste Trajektoriekandidat ausgewählt und das Verfahren erneut für diesen gestartet.

Ist dies nicht der Fall, dargestellt durch einen Nein-Zweig N2, wird in einem weiteren Verfahrensschritt S2 die Bestimmung der Objektkosten für das entsprechende Objekt 2, 3 des entsprechenden Trajektoriekandidaten durchgeführt.

Anschließend wird in einer dritten Verzweigung V3 die Bedingung gemäß Gleichung (4) überprüft und ermittelt, ob die minimale Beschleunigung auf der entsprechenden Trajektorie T1 bis Tn größer ist als die minimal zulässige Beschleunigung aQ.

Ist dies der Fall, dargestellt durch einen Ja-Zweig J3, werden in einem weiteren Verfahrensschritt S3 die Objektkosten für die entsprechende Trajektorie T1 bis Tn in der ungefilterten Kategorie A und der gefilterten Kategorie F aktualisiert.

Ist dies nicht der Fall, dargestellt durch einen Nein-Zweig N3, werden in einem weiteren Verfahrensschritt S4 die Objektkosten für die entsprechende Trajektorie T1 bis Tn nur in der ungefilterten Kategorie A aktualisiert.

Nach Ausführung des Verfahrensschritts S3 oder des Verfahrensschritts S4 wird in einem weiteren Verfahrensschritt S5 das nächste Objekt 2, 3 des jeweiligen Trajektoriekandidaten gewählt und mit der Überprüfung in der Verzweigung V2 für dieses Objekt 2, 3 fortgefahren.

Das heißt: Für jede Trajektorie T1 bis Tn der Trajektorienschar und für jedes Objekt 2, 3 aus der Menge der Objekte 2, 3 werden die Objektkosten für die jeweilige Trajektorie T1 bis Tn berechnet. Wenn die Bedingung min(ax(t)) > aQ für die jeweilige Trajektorie T1 bis Tn und das jeweilige Objekt 2, 3 erfüllt ist, werden die Objektkosten beiden Kategorien A, F zugeordnet, andernfalls werden sie nur der ungefilterten Kategorie A zugeordnet.

Wurden alle Objektkosten für alle möglichen Kombinationen von Trajektorien T1 bis Tn berechnet, werden die beiden besten Trajektorien T1 bis Tn aus beiden Kategorien A, F ermittelt und eine Solltrajektorie aus den beiden Trajektorien T1 bis Tn ausgewählt.

Ein mögliches Ausführungsbeispiel eines Ablaufs eines Verfahrens zu einer solchen Ermittlung und Auswahl zeigt Figur 5.

Hierbei wird in einem Verfahrensschritt S6 die Trajektorie T1 bis Tn mit den geringsten Kosten aus allen Trajektorien T1 bis Tn der ungefilterten Kategorie A ermittelt.

In einem weiteren Verfahrensschritt S7 wird die Trajektorie T1 bis Tn mit den geringsten Kosten aus allen Trajektorien T1 bis Tn der gefilterten Kategorie F ermittelt.

Anschließend wird in einer Verzweigung V überprüft, ob die minimale Beschleunigung min(ax(t)) auf einer Trajektorie T1 bis Tn der ungefilterten Kategorie A größer oder gleich der minimalen Beschleunigung min(ax(t)) auf einer Trajektorie T1 bis Tn der gefilterten Kategorie F ist.

Ist dies der Fall, dargestellt durch einen Ja-Zweig J, wird in einem Verfahrensschritt S8 die entsprechende Trajektorie T1 bis Tn der ungefilterten Kategorie A als Solltrajektorie gewählt. Ist dies nicht der Fall, dargestellt durch einen Nein-Zweig N, wird in einem Verfahrensschritt S9 die entsprechende Trajektorie T1 bis Tn der ungefilterten Kategorie A als Solltrajektorie gewählt.

Figur 6 zeigt eine Draufsicht eines Verkehrsszenarios mit einem Fahrzeug 1 und mehreren Objekten 2, 3, wobei das Objekt 2 einen geringen Qualitätswert Q und das Objekt 3 einen hohen Qualitätswert Q aufweist.

Ist beispielsweise die Trajektorie T5 der kostengünstigste Trajektoriekandidat aus der gefilterten Kategorie F und gibt die Trajektorie T5 vor, dass die Beschleunigung ax(t) bis auf einen Wert von beispielsweise - 5 m/s$^2$ absinken soll, gilt min(ax5(t)) = - 5 m/s$^2$.

In der ungefilterten Kategorie A ist beispielsweise die Trajektorie T1 der kostengünstigste Trajektoriekandidat. Die Trajektorie T1 gibt beispielsweise vor, dass die Beschleunigung ax(t) bis auf einen Wert von beispielsweise - 3 m/s$^2$ absinken soll. Es gilt also min(ax1(t)) = - 3 m/s$^2$.

Da mit - 3 m/s$^2$ $\geq$ - 5 m/s$^2$ die Bedingung min(ax1(t)) $\geq$ min(ax5(t)) erfüllt ist, wird die Trajektorie T1 als Solltrajektorie gewählt. Wäre die Bedingung hingegen nicht erfüllt, dann würde die Trajektorie T5 als Solltrajektorie ausgewählt.

Ist beispielsweise auch min(ax1(t)) = -5 m/s$^2$, bremsen somit beide Trajektorien T1 und T5 mit der gleichen Beschleunigung ax(t) auf das vorausfahrende Objekt 3. Die Trajektorie T1 berücksichtigt dabei auch das Objekt 2 mit dem geringen Qualitätswert Q. Die Trajektorie T5 dagegen nicht. Da die Bedingung min(ax1(t)) $\geq$ min(ax5(t)) auch hier erfüllt ist, wird die Trajektorie T1 als Solltrajektorie gewählt und dem Objekt 2 mit dem geringen Qualitätswert Q wird somit ausgewichen.

**Patentansprüche**

1. Verfahren zur Planung einer Solltrajektorie für ein automatisiert fahrendes Fahrzeug (1), wobei

   - eine Menge von Trajektoriekandidaten für einen vorgegebenen Planungshorizont (P) vorgegeben wird, wobei jeder Trajektoriekandidat einen Pfad vorgibt, dem das Fahrzeug (1) bei Auswahl des Trajektoriekandidaten als Solltrajektorie folgen soll, und eine Beschleunigung (ax(t)) vorgibt, mit der das Fahrzeug diesem Pfad folgen soll,
   - Objekte (2, 3) innerhalb des Planungshorizonts (P) detektiert werden,
   - mittels einer vorgegebenen Kostenfunktion den Trajektoriekandidaten jeweils Trajektoriekosten zugeordnet werden, wobei die Kostenfunktion von den detektierten Objekten (2, 3) abhängige Objektkosten umfasst, wobei Objektkosten eines Objekts (2, 3) für einen Trajektoriekandidaten mit sinkendem Abstand zwischen dem Objekt (2, 3) und dem Trajektoriekandidaten steigen, und
   - die Solltrajektorie in Abhängigkeit der Trajektoriekosten aus der Menge der Trajektoriekandidaten ausgewählt wird, und
   - für jedes detektierte Objekt (2, 3) ein Qualitätswert (Q) bestimmt wird, welcher ein Maß für eine Zuverlässigkeit der Detektion des Objekts (2, 3) angibt, **dadurch gekennzeichnet, dass**
   - für jedes Objekt (2, 3) in Abhängigkeit seines Qualitätswerts (Q) eine minimal zulässige Beschleunigung (aQ) bestimmt wird, mit welcher das Fahrzeug (1) auf das Objekt (2, 3) gebremst werden darf,
   - die Trajektoriekandidaten und die für diese ermittelten Objektkosten in Abhängigkeit der vom jeweiligen Trajektoriekandidaten vorgegebenen Beschleunigung (ax(t)) und in Abhängigkeit der minimal zulässigen Beschleunigung (aQ) bei der Bremsung auf das Objekt (2, 3) bewertet werden und
   - die Auswahl der Solltrajektorie zusätzlich unter Berücksichtigung der Bewertung der Trajektoriekandidaten und der für diese ermittelten Objektkosten durchgeführt wird.

2. Verfahren nach Anspruch 1,
   **dadurch gekennzeichnet, dass** als Solltrajektorie der Trajektoriekandidat mit den geringsten Trajektoriekosten aus der Menge der Trajektoriekandidaten ausgewählt wird.

3. Verfahren nach Anspruch 1 oder 2,
   **dadurch gekennzeichnet, dass**

   - bei der Bewertung eine Kategorisierung vorgenommen wird,
   - in der Kategorisierung zwischen einer ungefilterten Kategorie (A) und einer gefilterten Kategorie (F) unterschieden wird,
   - der ungefilterten Kategorie (A) alle Objektkosten und die zugehörigen Trajektoriekandidaten zugeordnet werden und
   - der gefilterten Kategorie (F) nur diejenigen Objektkosten und die zugehörigen Trajektoriekandidaten zugeordnet werden, für die gilt, dass das Minimum (min(ax(t)) der von dem jeweiligen Trajektoriekandidaten vorgegebenen Beschleunigung (ax(t)) größer als eine minimal zulässige Beschleunigung (aQ) des jeweiligen Objekts (2, 3) ist.

4. Verfahren nach Anspruch 3,
   **dadurch gekennzeichnet, dass** bei der Auswahl der Solltrajektorie

   - aus der ungefilterten Kategorie (A) und der gefilterten Kategorie (F) jeweils der Trajektoriekandidat mit den geringsten Trajektoriekosten ausgewählt wird,
   - für die beiden ausgewählten Trajektoriekandidaten jeweils das Minimum (min(ax(t)) der durch den jeweiligen Trajektoriekandidaten vorgegebenen Beschleunigung (ax(t)) ermittelt wird und
   - der Trajektoriekandidat mit dem größeren Minimum (min(ax(t)) als Solltrajektorie ausgewählt wird.

**Claims**

1. Method for planning a target trajectory for an automatedly driving vehicle (1),

   - a set of trajectory candidates for a specified planning horizon (P) being specified, each trajectory candidate specifying a path which the vehicle (1) should follow as the target trajectory when the trajectory candidate is selected, and specifying an acceleration (ax(t)) at which the vehicle should follow this path,
   - objects (2, 3) within the planning horizon (P) being detected,
   - trajectory costs being assigned to each trajectory candidate by means of a specified cost function, the cost function comprising object costs dependent on the detected objects (2, 3), object costs of an object (2, 3) increasing for a trajectory candidate with decreasing distance between the object (2, 3) and the trajectory candidate, and
   - the target trajectory being selected from the set of trajectory candidates on the basis of the trajectory costs, and
   - a quality value (Q) being determined for each detected object (2, 3), which value indicates a measure of the reliability of the detection of the object (2, 3),

   **characterized in that**

   - for each object (2, 3), a minimum permissible acceleration (aQ) at which the vehicle (1) may be braked onto the object (2, 3) is established on the basis of its quality value (Q),
   - the trajectory candidates and the object costs determined for them are evaluated on the basis of the acceleration (ax(t)) specified by the relevant trajectory candidate and on the basis of the minimum permissible acceleration (aQ) when braking onto the object (2, 3) and
   - the selection of the target trajectory is additionally carried out taking into account the evaluation of the trajectory candidates and of the object costs determined for them.

2. Method according to claim 1,
   **characterized in that** the trajectory candidate with the lowest trajectory costs from the set of trajectory candidates is selected as the target trajectory.

3. Method according to claim 1 or claim 2,
   **characterized in that**

   - a categorization is performed in the course of the evaluation,
   - in the categorization, a distinction is made between an unfiltered category (A) and a filtered category (F),
   - all object costs and the associated trajectory candidates are assigned to the unfiltered category (A) and
   - only the object costs and the associated trajectory candidates for which the minimum (min(ax(t)) of the acceleration (ax(t)) specified by the relevant trajectory candidate is greater than a minimum permissible acceleration (aQ) of the relevant object (2, 3) are assigned to the filtered category (F).

4. Method according to claim 3,
   **characterized in that** in the course of the selection of the target trajectory,

   - the trajectory candidate with the lowest trajectory costs is selected from the unfiltered category (A) and the filtered category (F), respectively,
   - the minimum (min(ax(t)) of the acceleration (ax(t)) specified by the relevant trajectory candidate is determined for the two the selected trajectory candidates, respectively, and
   - the trajectory candidate with the larger minimum (min(ax(t)) is selected as the target trajectory.

**Revendications**

1. Procédé pour la planification d'une trajectoire de consigne pour un véhicule (1) à conduite automatisée, dans lequel

   - un ensemble de trajectoires candidates est prédéfini pour un horizon de planification (P) prédéfini, dans lequel chaque trajectoire candidate prédéfinit un chemin que le véhicule (1) doit suivre lors d'une sélection de la trajectoire candidate comme trajectoire de consigne, et prédéfinit une accélération (ax(t)) à laquelle le véhicule doit suivre ledit chemin,

- des objets (2, 3) sont détectés à l'intérieur de l'horizon de planification (P),
- des coûts de trajectoire sont respectivement associés aux trajectoires candidates au moyen d'une fonction de coûts prédéfinie, dans lequel la fonction de coûts comprend des coûts d'objet dépendant des objets (2, 3) détectés, dans lequel les coûts d'objet d'un objet (2, 3) pour une trajectoire candidate augmentent lorsque la distance entre l'objet (2, 3) et la trajectoire candidate diminue, et
- la trajectoire de consigne est sélectionnée parmi l'ensemble des trajectoires candidates en fonction des coûts de trajectoire, et
- pour chaque objet (2, 3) détecté, une valeur de qualité (Q) est déterminée, laquelle indique une mesure pour une fiabilité de la détection de l'objet (2, 3),

**caractérisé en ce que**

- pour chaque objet (2, 3) est déterminée, en fonction de sa valeur de qualité (Q), une accélération minimale admissible (aQ) à laquelle le véhicule (1) peut être freiné sur l'objet (2, 3),
- les trajectoires candidates et les coûts d'objet déterminés pour celles-ci sont évalués en fonction de l'accélération (ax(t)) prédéfinie par la trajectoire candidate respective et en fonction de l'accélération minimale admissible (aQ) lors du freinage sur l'objet (2, 3), et
- la sélection de la trajectoire de consigne est en outre réalisée en prenant en compte l'évaluation des trajectoires candidates et des coûts d'objet déterminés pour celles-ci.

2. Procédé selon la revendication 1,
**caractérisé en ce que** la trajectoire candidate comportant les coûts de trajectoire les plus faibles est sélectionnée comme trajectoire de consigne parmi l'ensemble des trajectoires candidates.

3. Procédé selon la revendication 1 ou 2,
**caractérisé en ce que**

- une catégorisation est effectuée lors de l'évaluation,
- une distinction est faite dans la catégorisation entre une catégorie non filtrée (A) et une catégorie filtrée (F),
- tous les coûts d'objet et les trajectoires candidates correspondantes sont associés à la catégorie non filtrée (A), et
- seuls les coûts d'objet et les trajectoires candidates correspondantes dont le minimum (min(ax(t)) de l'accélération (ax(t)) prédéfinie par la trajectoire candidate respective est supérieur à une accélération minimale admissible (aQ) de l'objet (2, 3) respectif sont associés à la catégorie filtrée (F).

4. Procédé selon la revendication 3,
**caractérisé en ce que,** lors de la sélection de la trajectoire de consigne,

- la trajectoire candidate comportant les coûts de trajectoire les plus faibles est respectivement sélectionnée à partir de la catégorie non filtrée (A) et de la catégorie filtrée (F),
- le minimum (min(ax(t)) de l'accélération (ax(t)) prédéfinie par la trajectoire candidate respective est déterminé pour chacune des deux trajectoires candidates sélectionnées, et
- la trajectoire candidate comportant le minimum (min(ax(t)) le plus grand est sélectionnée comme trajectoire de consigne.

FIG 1

FIG 2

FIG 3

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020108857 A1
- DE 102020200183 A1
- DE 102015016544 A1
- DE 102016218121 A1
- WO 2020041214 A1
- DE 102020004215 A1
- WO 2022066458 A1
- US 2021114617 A1